# EUROPEAN PATENT APPLICATION

(11) **EP 4 676 150 A1**
(43) Date of publication of application: **07.01.2026**
(21) Application number: 24785220.5
(22) Date of filing: 03.04.2024
(51) Int. Cl.: H04W 72/231, H04W 72/232, H04W 72/12, H04W 72/0457, H04W 72/04, H04B 7/0413

(54) **METHOD AND DEVICE FOR SUPPORTING TRP OPERATION IN WIRELESS COMMUNICATION SYSTEM**

(30) Priority: 06.04.2023 KR 20230045547
(71) Applicant: Samsung Electronics Co., Ltd., Suwon-si, Gyeonggi-do 16677 (KR)
(72) Inventor: JIN, Seungri, Suwon-si, Gyeonggi-do 16677 (KR)
(74) Representative: Nederlandsch Octrooibureau
(86) International application number: PCT/KR2024/004337
(87) International publication number: WO 2024/210517

(57) **Abstract**

The present disclosure relates to a 5G or 6G communication system for supporting higher data transmission rates. A method performed by a user equipment (UE) in a wireless communication system may comprise receiving, from a base station, a medium access control (MAC) control element (CE) including a control resource set (CORESET) pool ID field and a transmission configuration indicator (TCI) state identification (ID) field indicating a plurality of TCI states, wherein the CORESET pool ID field indicates a CORESET pool associated with the plurality of TCI states and receiving, from the base station, downlink control information (DCI) including information indicating a TCI state among the plurality of TCI states within a CORESET of the CORESET pool.

## Description

### [Technical Field]

The disclosure relates to a wireless communication system. The disclosure relates more specifically to a method and a device for supporting a TRP operation in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments of the disclosure are to provide a device and a method capable of effectively providing services in a wireless communication system.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

According to an embodiment, a method performed by a terminal in a wireless communication system may include receiving a first control signal transmitted from a base station, processing the received first control signal, and transmitting a second control signal generated based on the processing to the base station.

### [Advantageous Effects of Invention]

According to an embodiment of the disclosure, a device and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a structure of a long term evolution (LTE) system according to an embodiment.
FIG. 2 illustrates a radio protocol structure in an LTE system according to an embodiment.
FIG. 3 illustrates a structure of a mobile communication system according to an embodiment.
FIG. 4 illustrates a radio protocol structure of a mobile communication system according to an embodiment.
FIG. 5 illustrates a structure of a mobile communication system according to an embodiment.
FIG. 6 is a diagram illustrating a procedure in which a unified TCI state is applied and a unified TCI state MAC CE, in an NR system according to an embodiment.
FIG. 7 is a diagram illustrating a method applicable to multiple TRPs based on a unified TCI state structure according to an embodiment.
FIG. 8 is a diagram illustrating a procedure in which a data enhancement technique is applied through multiple TRPs based on a unified TCI framework in an NR system according to an embodiment.
FIG. 9A illustrates a MAC CE structure for activating a unified TCI state to support an enhanced data transmission and reception technique through multiple TRPs according to an embodiment.
FIG. 9B illustrates a MAC CE structure for activating a unified TCI state to support an enhanced data transmission and reception technique through multiple TRPs according to an embodiment.
FIG. 9C illustrates a MAC CE structure for activating a unified TCI state to support an enhanced data transmission and reception technique through multiple TRPs according to an embodiment.
FIG. 9D illustrates a MAC CE structure for activating a unified TCI state to support an enhanced data transmission and reception technique through multiple TRPs according to an embodiment.
FIG. 9E illustrates a MAC CE structure for activating a unified TCI state to support an enhanced data transmission and reception technique through multiple TRPs according to an embodiment.
FIG. 9F illustrates a MAC CE structure for activating a unified TCI state to support an enhanced data transmission and reception technique through multiple TRPs according to an embodiment.
FIG. 10 is a diagram illustrating operations of a terminal according to an embodiment.
FIG. 11 is a diagram illustrating operations of a base station according to an embodiment.
FIG. 12 is a block diagram illustrating an exemplary structure of a UE according to an embodiment.
FIG. 13 is a block diagram illustrating an exemplary structure of a base station according to an embodiment.

### [Mode for the Invention]

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards.

The disclosure relates to an operation of configuring and activating unified beam information (unified TCI state: unified transmission configuration indication state) used by a UE for a physical downlink control channel (PDCCH)/physical downlink shared channel (PDSCH)/physical uplink control channel (PUCCH)/physical uplink shared channel (PUSCH) in a next-generation mobile communication system using beams. Currently, only beam (TCI state) activation/deactivation is possible for a specific bandwidth part (BWP) within a single serving cell. It is necessary to support a transmission and reception technique through multiple transmission reception points (TRPs) for a specific BWP within a serving cell or between serving cells.

In a next-generation mobile communication system according to the disclosure, a unified TCI framework may be used to support an enhanced transmission and reception technique through multiple TRPs, such as transmission and reception support through a single DCI or transmission and reception support through two TRPs.

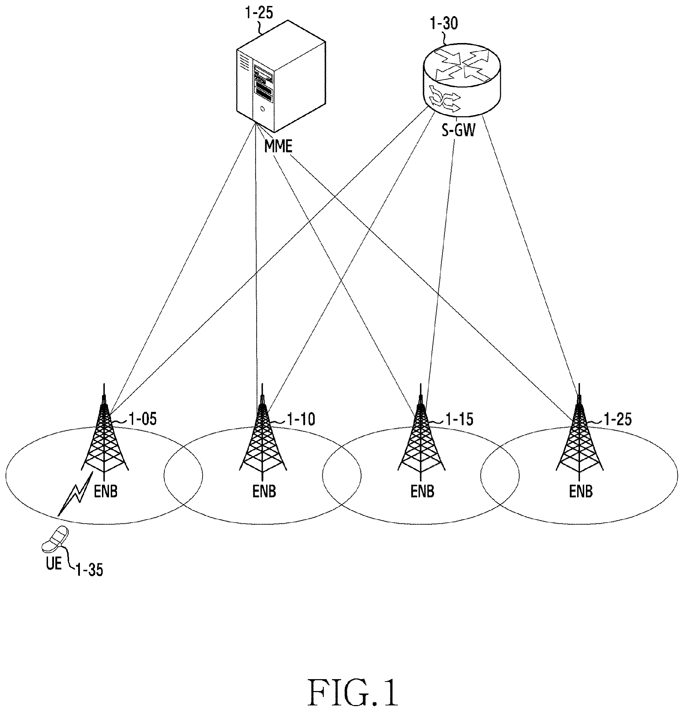

FIG. 1 illustrates a structure of an LTE system according to an embodiment.

Referring to FIG. 1, a radio access network of an LTE system according to an embodiment may include next-generation base stations (evolved node Bs, hereinafter eNBs, node Bs, or base stations) 1-05, 1-10, 1-15, and 1-20, a mobility management entity (MME) 1-25, and/or a serving gateway (S-GW) 1-30. A user equipment (hereinafter UE or terminal) 1-35 accesses an external network through the eNBs 1-05 to 1-20 and the S-GW 1-30.

FIG. 1, the eNBs 1-05 to 1-20 may correspond to conventional node Bs of a universal mobile telecommunication system (UMTS). For example, the eNBs are connected to the UE 1-35 through a radio channel, and perform more complicated roles than the conventional node Bs.

According to an embodiment, in the LTE system, since all user traffic including real-time services, such as voice over IP (VoIP) via the Internet protocol, is serviced through a shared channel, a device that collects information and performs scheduling accordingly may be required. For example, the eNBs 1-05 to 1-20 is responsible for functions of collecting the state information, such as buffer statuses, available transmit power states, and channel states of UEs, and performing scheduling accordingly.

According to an embodiment, in general, one eNB controls multiple cells. For example, in order to implement a transfer rate of 100Mbps, the LTE system may use orthogonal frequency division multiplexing (hereinafter referred to as OFDM) as a radio access technology in a designated bandwidth (e.g., 20MHz band).

According to an embodiment, the LTE system may employ an adaptive modulation & coding (hereinafter referred to as AMC) scheme for determining a modulation scheme and a channel coding rate according to a channel state of a UE.

According to an embodiment, the S-GW 1-30 is an apparatus or device for providing a data bearer, and may generate or remove a data bearer under the control of the MME 1-25. The MME is a device responsible for various control functions as well as a mobility management function for a UE, and may be connected to multiple base stations.

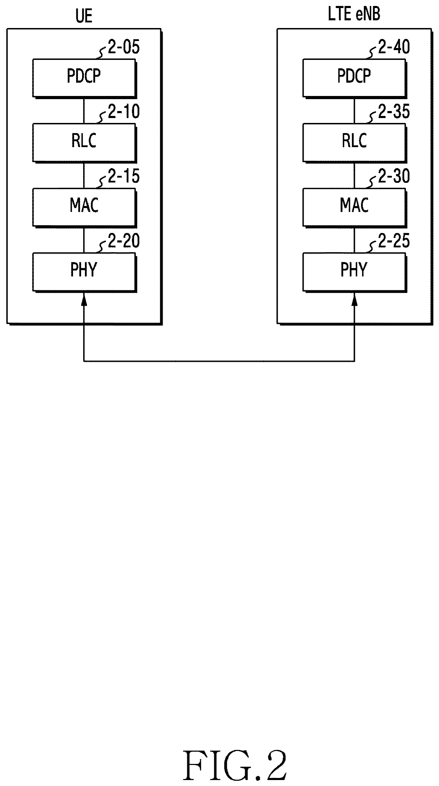

FIG. 2 illustrates a radio protocol structure in an LTE system according to an embodiment.

Referring to FIG. 2, a radio protocol of an LTE system according to an embodiment includes a packet data convergence protocol (PDCP) 2-05 or 2-40, a radio link control (RLC) 2-10 or 2-35, and/or a medium access control (MAC) 2-15 or 2-30 on each of UE and eNB sides. Referring to FIG. 2, a radio access protocol of an LTE system may include a PDCP 2-05 or 2-40, an RLC 2-10 or 2-35, and/or an MAC 2-15 or 2-30 on each of UE and eNB sides.

According to an embodiment, the PDCP 2-05 or 2-40 may serve to perform operations, such as IP header compression/reconstruction. The functions (or main functions) of the PDCP may include at least one of functions below.
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer service data units (SDUs) at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink
- The radio link control (hereinafter referred to as RLC) 2-10 or 2-35 reconfigures a PDCP protocol data unit (PDU) into appropriate sizes to perform an ARQ operation. etc. The main functions of the RLC are summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 2-15 or 2-30 may be connected to several RLC layer devices configured in a single UE, and multiplex RLC PDUs into an MAC PDU and demultiplex RLC PDUs from an MAC PDU.

The functions (or main functions) of the MAC may include at least one of functions below.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment, a physical (PHY) layer 2-20 or 2-25 may perform channel-coding of higher layer data and modulate high layer data. The PHY layer 2-20 or 2-25 may generate higher layer data into OFDM symbols, and deliver the same through a radio channel, or demodulate OFDM symbols received through the radio channel, perform channel-decoding thereof, and deliver the same to the higher layer.

In addition, the PHY layer 220 or 225 may use a hybrid ARQ (automatic repeat request) (HARQ) for additional error correction, and a receiving end may use 1 bit to transmit whether a packet transmitted by a transmitting end is received. For example, the 1 bit transmitted by the receiving end may be referred to as HARQ ACK/NACK information. For example, downlink HARQ ACK/NACK information in response to uplink data transmission may be transmitted through a physical hybrid-ARQ indicator channel (PHICH). For example, uplink HARQ ACK/NACK information in response to downlink data transmission may be transmitted through a physical uplink control channel (PUCCH) or through a physical uplink shared channel (PUSCH).

The PHY layer may include one or multiple frequencies/carriers. A technology for simultaneously configuring and using multiple frequencies is referred to as carrier aggregation (hereinafter CA). For example, only one carrier has been used for communication between a user equipment (UE) and a base station (E-UTRAN Node B (eNB)), buy in the CA technology, one primary carrier and multiple secondary carriers are additionally used and thus data capacity may be greatly increased as much as the number of secondary carriers. In LTE, a cell in an eNB using the primary carrier may be referred to as a primary cell (PCell) and a cell in an eNB using the secondary carrier may be referred to as a secondary cell (SCell).

Although not illustrated in FIG. 2, a radio resource control (RRC) layer may exist as a higher layer than each PDCP layer of the UE and the eNB. The RRC layer may exchange access/measurement-related configuration control messages for radio resource control.

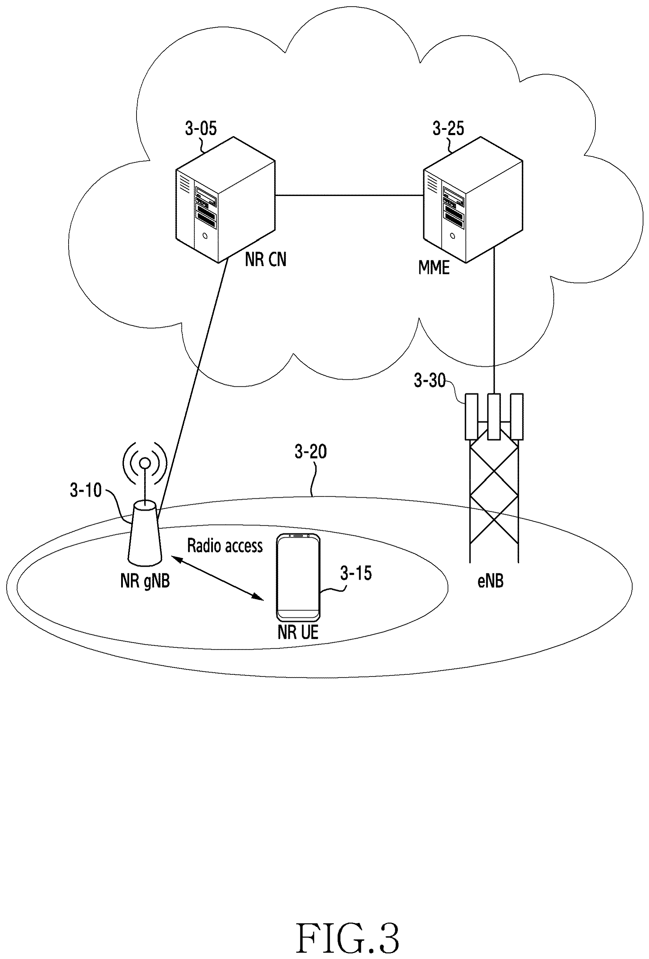

FIG. 3 illustrates a structure of a mobile communication system according to an embodiment.

Referring to FIG. 3, a radio access network of a mobile communication system (or next generation mobile communication system) according to an embodiment includes a base stations (e.g., new radio Node B) 3-10 and a new radio core network or next generation core network (NR CN) 3-05. For example, the base station (e.g., new radio Node B) may be hereinafter referred to as "NR NB".

A user terminal (new radio user equipment) 3-15 accesses an external network via the NR NB 3-10 and the NR CN 3-05. For example, the user terminal may be referred to as "NR UE" or "terminal".

In FIG. 3, the NR NB 3-10 may correspond to an evolved node B (eNB) of an LTE system. NR NB may be connected to the NR UE 3-15 through a radio channel and provide outstanding services as compared to a Node B. In the mobile communication system (or wireless communication system), since all user traffic is serviced through a shared channel, a device that collects state information, such as buffer statuses, available transmit power states, and channel states of UEs, and performs scheduling accordingly may be required. For example, the NR NB 3-10 may be responsible for collecting the state information, such as buffer statuses, available transmit power states, and channel states of UEs, and performing scheduling accordingly.

According to an embodiment, in general, at least one NR NB may control or manage multiple cells. In order to implement ultrahigh-speed data transfer beyond a designated communication scheme (e.g., LTE), a wider bandwidth than the maximum bandwidth of the designated communication scheme may be required. Also, in order to implement the ultrahigh-speed data transfer, an orthogonal frequency division multiplexing (hereinafter referred to as OFDM) may be employed as a radio access technology, and additionally a beamforming technology may be integrated therewith.

According to an embodiment, an adaptive modulation & coding (hereinafter referred to as AMC) scheme for determining a modulation scheme and a channel coding rate according to a channel state of a UE may be employed. For example, the NR CN 3-05 may perform functions such as mobility support, bearer configuration, and quality of service (QoS) configuration. For example, the NR CN is a device responsible for various control functions as well as a mobility management function for a UE, and may be connected to multiple base stations. The mobile communication system (or next generation mobile communication system) may interwork with a designated communication system, and the NR CN may be connected to an MME 3-25 via a network interface. The MME may be connected to an eNB 3-30 that is an existing base station.

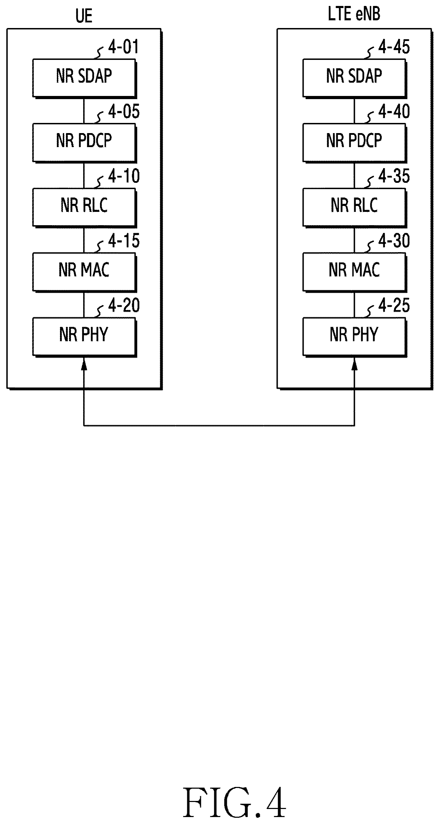

FIG. 4 illustrates a radio protocol structure of a mobile communication system according to an embodiment.

Referring to FIG. 4, a radio protocol of a mobile communication system (or next generation mobile communication system) includes an NR SDAP 4-01 or 4-45, an NR PDCP 4-05 or 4-40, an NR RLC 4-10 or 4-35, and/or an NR MAC 4-15 or 4-30 on each of UE and NR NB sides. For example, a radio protocol of a mobile communication system may include an NR SDAP 4-01 or 4-45, an NR PDCP 4-05 or 4-40, an NR RLC 4-10 or 4-35, and/or an NR MAC 4-15 or 4-30 on each of UE and NR NB sides.

According to an embodiment, the functions (or main functions) of the NR SDAP 4-01 or 4-45 may include at least one of functions below.
- Transfer of user plane data
- Mapping between a QoS flow and a data radio bearer (DRB) for both downlink (DL) and uplink (UL)
- Marking QoS flow ID in both DL and UL packets
- Reflective QoS flow to DRB mapping for UL SDAP PDUs

According to an embodiment, with regard to the SDAP layer device, the UE may be configured with whether to use the header of the SDAP layer device according to PDCP layer devices or according to bearers or according to logical channels through an RRC message. As another example, with regard to the SDAP layer device, the UE may be configured with whether to use functions of the SDAP layer device according to PDCP layer devices or according to bearers or according to logical channels through an RRC message.

According to an embodiment, in case that an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. For example, the SDAP header may include QoS flow ID information indicating the QoS. For example, the QoS information may include data processing priority and/or scheduling information for smoothly supporting services, and may be used to identify the data processing priority and/or scheduling information.

According to an embodiment, the main functions of the NR PDCP 4-05 or 4-40 may include at least one of functions below.
- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment, the reordering of the NR PDCP device may refer to a function of reordering packet data convergence protocol protocol data units (PDCP PDUs) received from a lower layer in sequence based on PDCP sequence numbers (SNs).

For example, the reordering of the NR PDCP device may include a function of transferring data to a higher layer in the reordered sequence. As another example, the reordering of the NR PDCP device may include a function of transferring data directly to a higher layer without considering the sequence. As another example, the reordering of the NR PDCP device may include a function of reordering the sequence to record lost PDCP PDUs. For example, the reordering of the NR PDCP device may include a function of reporting the state of the lost PDCP PDUs to the transmitting side, and may include a function of requesting retransmission of the lost PDCP PDUs.

According to an embodiment, the functions (or main functions) of the NR RLC 4-10 or 4-35 may include at least one of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of successively delivering RLC SDUs received from the lower layer to the higher layer.

For example, the in-sequence delivery of the NR RLC device may include a function of, in case that one original RLC SDU is segmented into multiple RLC SDUs and the segmented RLC SDUs are received, reassembling the RLC SDUs and delivering the reassembled RLC SDUs. For example, the in-sequence delivery of the NR RLC device may include a function of rearranging received RLC PDUs with respect to RLC sequence numbers (SNs) or PDCP sequence numbers (SNs). For example, the in-sequence delivery of the NR RLC device may include a function of recording RLC PDUs lost as a result of reordering, and may include a function of reporting the state of the lost RLC PDUs to the transmitting side. For example, the in-sequence delivery of the NR RLC device may include a function of requesting retransmission of the lost RLC PDUs, and may include a function of, if there is a lost RLC SDU, successively delivering only RLC SDUs before the lost RLC SDU to the higher layer, For example, the in-sequence delivery of the NR RLC device may include a function of, if a predetermined timer has expired although there is a lost RLC SDU, successively delivering all RLC SDUs received before the timer was started to the higher layer. For example, the in-sequence delivery of the NR RLC device may include a function of, if a predetermined timer has expired although there is a lost RLC SDU, successively delivering all RLC SDUs received until now to the higher layer.

According to an embodiment, the NR RLC device may process RLC PDUs in the received sequence (regardless of the sequence number order, in the sequence of arrival) and deliver same to the PDCP device regardless of the sequence (out-of-sequence delivery). In case that receiving segments, the NR RLC device may receive segments stored in a buffer or to be received later, reconfigure the segments into one whole RLC PDU, process the RLC PDU, and then deliver the processed RLC PDU to the PDCP device. The NR RLC layer may include no concatenation function, which may be performed in the NR MAC layer or replaced with a multiplexing function of the NR MAC layer.

According to an embodiment, the out-of-sequence delivery of the NR RLC device may refer to a function of instantly delivering RLC SDUs received from the lower layer to the upper layer regardless of the order.

For example, the out-sequence delivery of the NR RLC device may include a function of, in case that one original RLC SDU is segmented into multiple RLC SDUs and the segmented RLC SDUs are received, reassembling the RLC SDUs and delivering the reassembled RLC SDUs. For example, the out-of-sequence delivery of the NR RLC device may include a function of storing RLC SNs or PDCP SNs of received RLC PDUs and arranging the sequence to record lost RLC PDUs.

According to an embodiment, the NR MAC 4-15 or 4-30 may be connected to multiple NR RLC layer devices configured in one UE, and the main functions of the NR MAC may include at least one of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding
- An NR PHY layer 4-20 or 4-25 may perform operations of channel-coding and modulating higher layer data, thereby obtaining OFDM symbols, and delivering the same through a radio channel, or demodulating OFDM symbols received through the radio channel, channel-decoding the same, and delivering the same to the higher layer.

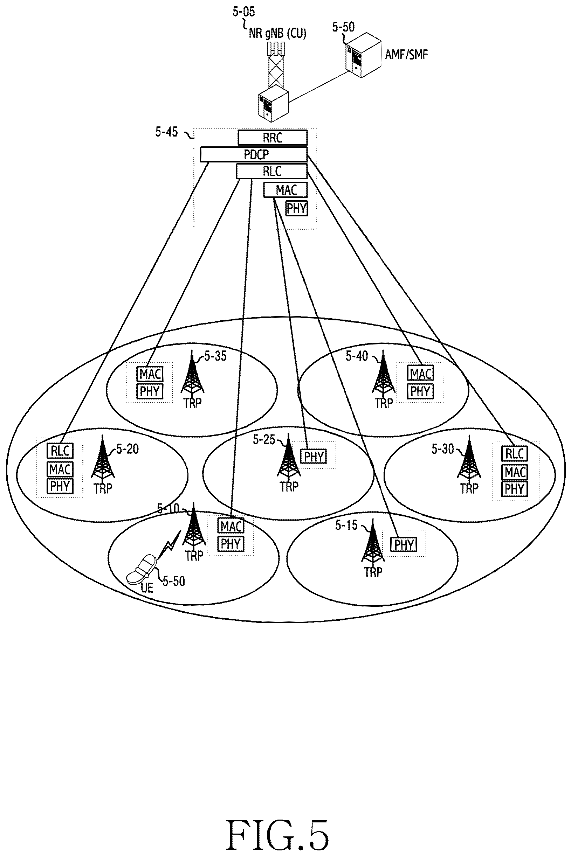

FIG. 5 is a diagram illustrating a structure of a mobile communication system according to an embodiment.

Referring to FIG. 5, a cell served by an NR gNB 5-05 operating based on a beam according to an embodiment may include multiple transmission reception points (TRPs) 5-10, 5-15, 5-20, 5-25, 5-30, 5-35, and 5-40.

According to an embodiment, the TRPs 5-10 to 5-40 may be referred to as a block in which some functions of transmitting and receiving a physical signal are separated from the existing NR base station (eNB), and the TRPs 5-10 to 5-40 may include multiple antennas.

According to an embodiment, the NR gNB 5-05 may be referred to as a central unit (CU), and the TRPs may be referred to as distributed units (DUs). The functions of the NR gNB 5-05 and the TRPs may be configured by separating each layer in PDCP/RLC/MAC/PHY layers, as shown in 5-45.

For example, the TRPs 5-15 and 5-25 may include only the PHY layer and perform a function of the included layer. For example, the TRPs 5-10, 5-35, and 5-40 may include only the PHY layer and the MAC layer, and perform functions of the included layers. For example, the TRPs 5-20 and 5-30 may include only the PHY layer, the MAC layer, and the RLC layer, and perform functions of the included layers. Particularly, the TRPs 5-10 to 5-40 may use beamforming technology which uses multiple transmission and reception antennas to generate narrow beams in multiple directions and transmit and receive data.

According to an embodiment, a user equipment 5-50 may connect to the NR gNB 5-05 and an external network through the TRPs 5-10 to 5-40. The NR gNB 5-05 may collect status information, such as buffer status, available transmission power status, and channel status, of UEs to perform scheduling and support connection between the UEs and a core network (CN) in order to provide a service to users. For example, the NR gNB 5-05 may support connection between the UEs and an access and mobility management function (AMF)/session management function (SMF) 5-50.

A beam used for transmitting and receiving data through all channels used by a UE in a mobile communication system may be indicated based on a unified transmission configuration indicator (TCI) state structure. The disclosure describes a method for improving the efficiency of operations with respect to a beam indicated based on a unified TCI state structure.

For example, unlike the existing TCI framework, the disclosure supports a TCI state which may be commonly applied to both an uplink and a downlink. That is, although a unified TCI framework may have a difference in signaling structure depending on a mode, the disclosure may support a TCI state which may be commonly applied to both an uplink and a downlink.
- Separate UL/DL TCI state mode: A separate TCI state is configured and managed for an uplink and a downlink.
- Joint TCI DL/UL state mode: A TCI state commonly applied to both an uplink and a downlink is configured and managed.
- Further, unlike other TCI state structures, the unified TCI state is applied commonly to a PDCCH/PDSCH/PUCCH/PUSCH. For example, when a beam is indicated through a unified TCI state, the corresponding beam is applied to all uplink and downlink channel transmissions. For reference, in other TCI states, a separate beam management procedure exists in which a spatial relation is indicated for an uplink and a TCI state is indicated for a downlink.

According to an embodiment, the unified TCI framework only supports a beam management operation (e.g., inter-cell beam management (ICBM)) when only a single TRP exists within a serving cell. The disclosure is to support a transmission and reception technique which is supported when multiple TRPs exist in a single serving cell with respect to the unified TCI framework. For example, in relation to supporting a multi-TRP transmission and reception enhancement technique to which a unified TCI framework is applied, a method of introducing a new MAC CE to provide support is proposed.

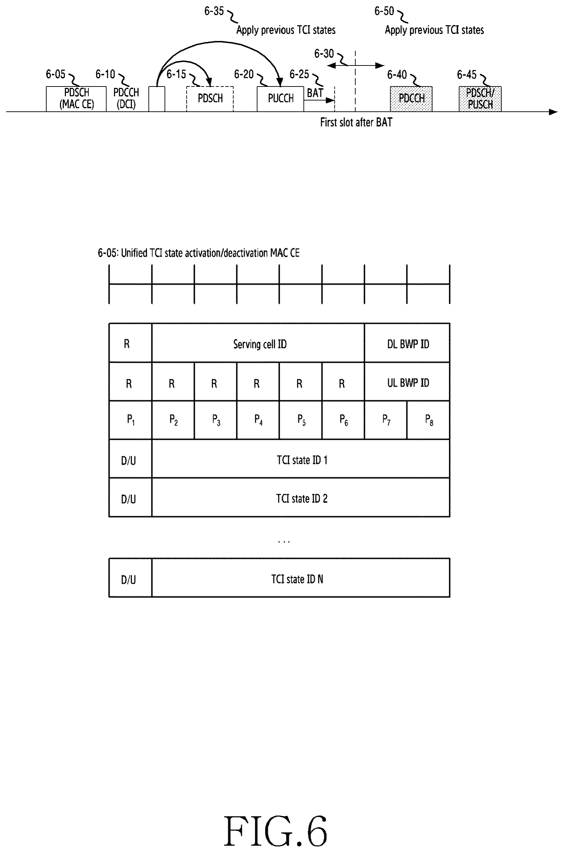

FIG. 6 is a diagram illustrating a procedure in which a unified TCI state is applied and a unified TCI state MAC CE, in an NR system according to an embodiment.

Referring to FIG. 6, an example of a method in which a unified TCI state functionally operates according to an embodiment is described.

According to an embodiment, a UE in an RRC connection state may perform transmission and/or reception of data with a base station (e.g., a serving cell (e.g., PCell)), and may perform Layer 1 channel measurement according to a base station configuration to change to an optimal beam, and report a result value of the channel measurement to the base station.

According to an embodiment, the base station may check or identify a Layer 1 channel measurement value reported by the UE, identify which beam (e.g., a preferred beam or a beam having high signal quality) is the best for the UE, and indicate a change to the identified beam. The following description explains a procedure for indicating an optimal beam (e.g., a preferred beam or a beam having high signal quality) to the UE based on a unified TCI framework.

Although omitted in FIG. 6, the base station may configure a unified TCI state for the UE through an RRC configuration.
1. Joint UL/DL mode: The UE may be configured to share the same TCI configuration for both a UL and a DL. (in PDSCH-Config) For example, Table 1 illustrates a configuration (or configuration information) of the Joint UL/DL mode (e.g., a unified TCI state applied to both a UL and a DL). 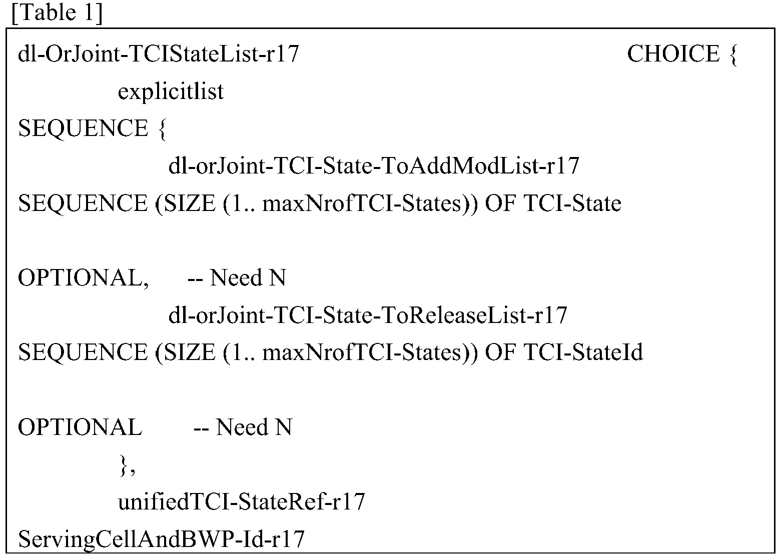 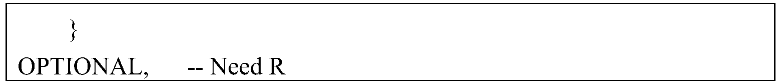
2. Separate UL/DL mode: A UL and a DL may provide their respective TCI configurations. A TCI state for the DL may be based on a configuration in dl-OrJoint-TCIStateList-r17 (in PDSCH-Config). A TCI state for the UL may be based on ul-TCI-StateList-r17 (in BWP-UplinkDedicated). For example, Table 2 and/or Table 3 illustrate a configuration (or configuration information) of a unified TCI state applied to the UL in a separate UL/DL mode. For example, a configuration (or configuration information) of a unified TCI state applied to the DL in a separate UL/DL mode may use the configuration (or configuration information) illustrated in Table 1.

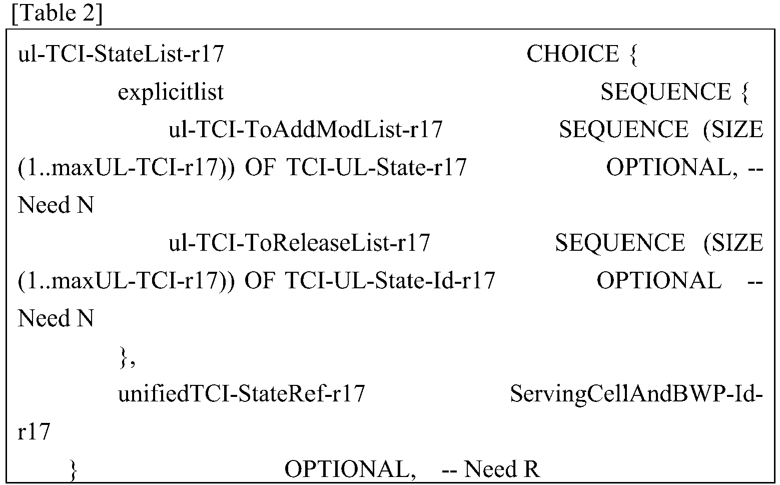

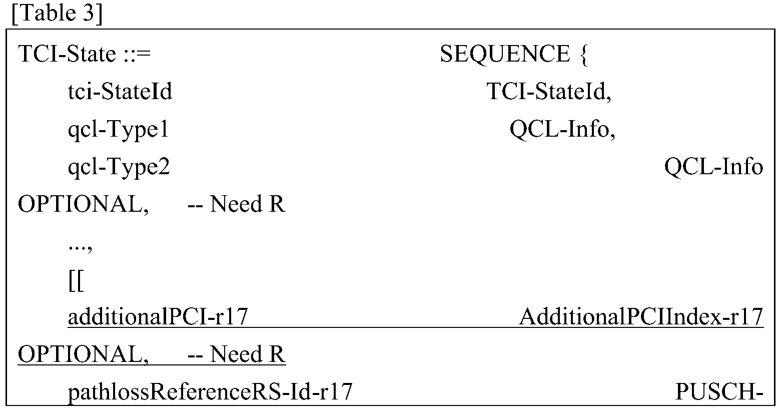

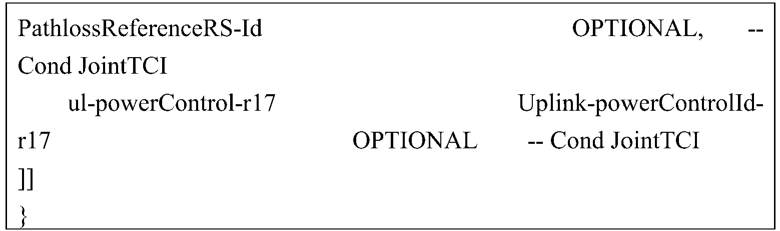

For reference, a beam indicated in a unified TCI state may also indicate a TCI state of a cell having a different PCI from a serving cell.

According to an embodiment, in step 6-05, the base station may indicate the UE to activate one or multiple TCI states through a unified TCI state activation/deactivation MAC CE. For example, a MAC CE (e.g., a unified TCI state activation/deactivation MAC CE) may indicate multiple TCI states indicated for each serving cell and for each UL/DL BWP. For example, a P field may be an indicator indicating whether the indicated unified TCI state is indicated separately for an uplink/downlink. The P field will be described in detail in Table 4.

**[Table 4]**

| |
|---|
| Pᵢ: This field indicates whether each TCI codepoint has multiple TCI states or single TCI state. If Pᵢ field is set to 1, it indicates that i^{th} TCI codepoint includes the DL TCI state and the UL TCI state. If Pᵢ field is set to 0, it indicates that i^{th} TCI codepoint includes only the DL/joint TCI state or the UL TCI state. The codepoint to which a TCI state is mapped is determined by its ordinal position among all the TCI state ID fields; |

According to an embodiment, in step 6-10, the base station may indicate, to the UE, one unified TCI state to be applied to the UE through DCI. In case that only one TCI state code point has been transmitted through a MAC CE in step 6-05, the UE activates the TCI state without receiving the DCI. For example, the UE may activate a TCI state corresponding to one TCI state code point without receiving the DCI.

According to an embodiment, the DCI may schedule a downlink PDSCH or may indicate only a beam without PDSCH scheduling. For example, when a downlink PDSCH is scheduled in the DCI, PDSCH transmission may be accompanied as in step 6-15. For example, when a downlink PDSCH is not scheduled in the DCI, step 6-15 may be omitted without a separate PDSCH transmission.

According to an embodiment, in step 6-20, the UE may transmit, to the base station, through a PUCCH, an ACK signal indicating that the DCI or PDSCH received from the base station has been successfully received.

According to an embodiment, a time point at which the UE applies the indicated unified TCI state may be a first slot 6-40 after a time equal to a beam application time (BAT) 6-25 has elapsed from when the UE transmits the ACK signal through the PUCCH. For example, the UE may apply the indicated unified TCI state to all uplink and downlink channels (PDCCH/PDSCH/PUCCH/PUSCH) in the first slot 6-40 after the time equal to the beam application time (BAT) 6-25 has elapsed from when the UE transmits the ACK signal through the PUCCH. Before the first slot 6-40, the UE may continue to use the previously used TCI state (6-35). For all subsequent channel transmissions (6-40 and 6-45), a new beam indicated to be activated by the unified TCI state may be applied (6-50).

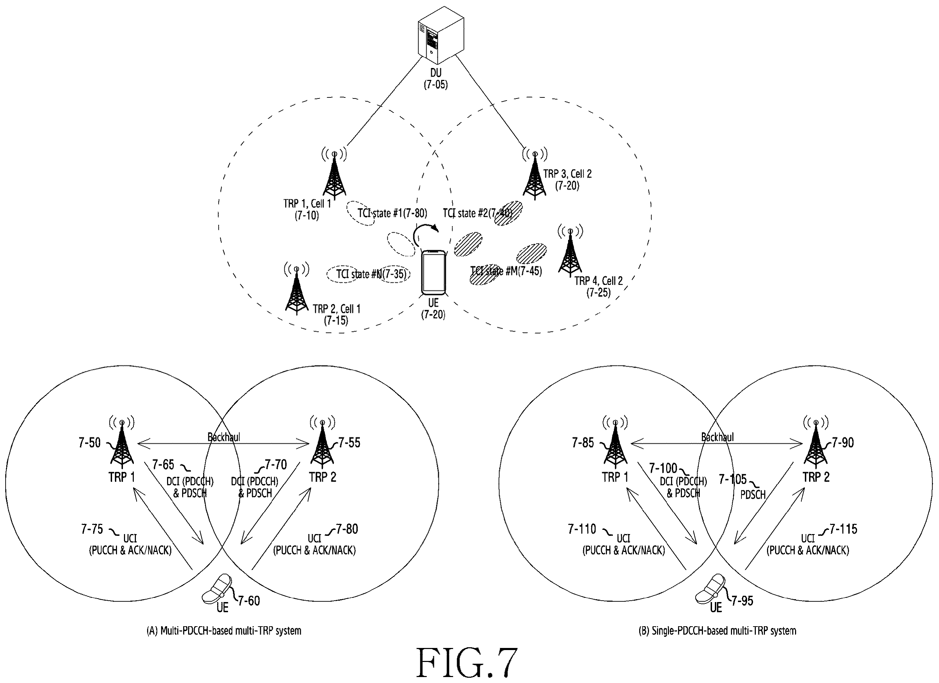

FIG. 7 is a diagram illustrating a method applicable to multiple TRPs based on a unified TCI state structure according to an embodiment.

Referring to FIG. 7, a case is described where multiple cells and TRPs 7-10, 7-15, 7-20, and 7-25 (e.g., TRP1-Cell1, TRP2-Cell1, TRP3-Cell2, and TRP4-Cell2) exist within a single distributed unit (DU) 7-05. However, this is merely an example. For example, the description of the disclosure is applicable to even the case of an inter-DU (where each DU configures a single TRP-Cell). That is, the descriptions described in FIGS. 1 to 13 of the disclosure may be applied even when one TRP is configured within one DU.

According to an embodiment, a UE 5-20 may receive support for a multi-TRP data transmission and reception enhancement technique supported by a TCI framework through the multiple cells and TRPs 7-10, 7-15, 7-20, and 7-25 (e.g., TRP1-Cell1, TRP2-Cell1, TRP3-Cell2, and TRP4-Cell2). For example, a beam used by the UE for data transmission and reception through the multiple cells and TRPs 7-10, 7-15, 7-20, and 7-25 (e.g., TRP1-Cell1, TRP2-Cell1, TRP3-Cell2, and TRP4-Cell2) may be indicated through a unified TCI state. For example, there may be TCI state #1 7-30, TCI state #N 7-35, TCI state #2 7-40, and TCI state #M 7-45 in association with each cell and TRP.

According to an embodiment, the following two methods are proposed in the disclosure to support a multi-TRP data transmission and reception enhancement technique by using a unified TCI state. Hereinafter, while the two methods are described below separately, this is merely an example, and the two methods may be combined as long as they are not mutually contradictory.
(A) A PDSCH transmission technique based on multiple PDCCHs
   ◆ A method in which a PDCCH transmitted from each TRP schedules a PDSCH that is transmitted subsequently from the TRP (7-65 and 7-70)
   ◆ PDSCH transmissions are performed by two TRPs, but each transmission may be managed independently.
   ◆ PDSCH transmissions from two TRPs may be delivered in the same slot. (PDCCH transmissions are delivered in different slots.)
   ◆ PUCCH transmissions corresponding to two PDSCH transmissions may also be delivered to the respective TRPs from which the PUCCH transmissions have been received. (7-75 and 7-80)
   ◆ A PDSCH transmission technique based on one PDCCH
   ◆ A method for transmitting a PDCCH from one TRP to schedule a PDSCH transmitted through a different TRP (7-100)
   ◆ PDSCH transmissions are performed by two TRPs, and may be managed by one TRP (7-100 and 7-105).
   ◆ PUCCH transmissions corresponding to two PDSCH transmissions may also be delivered to the respective TRPs from which the PUCCH transmissions have been received. (7-110 and 7-115)

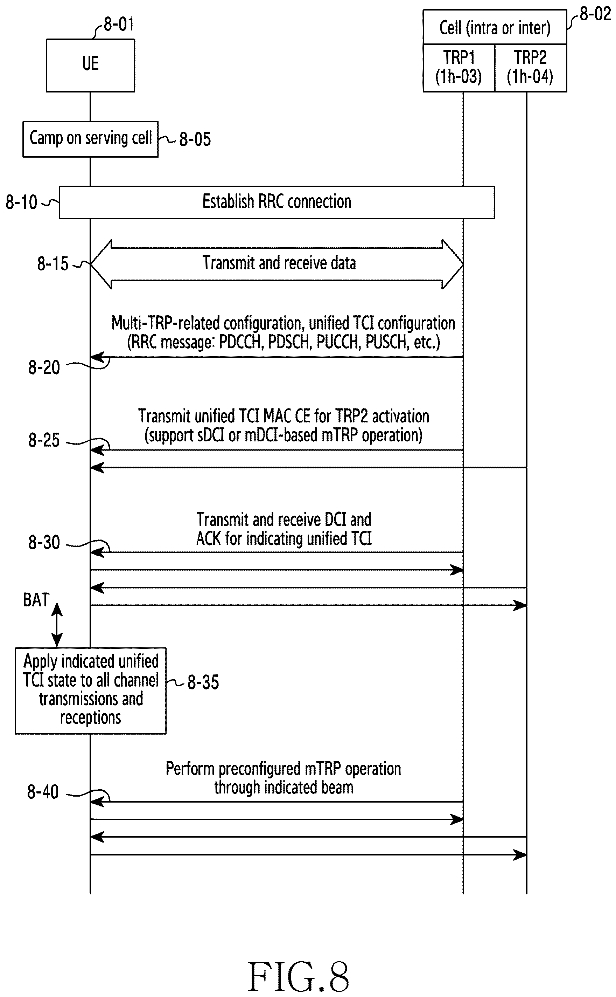

FIG. 8 is a diagram illustrating a procedure in which a data enhancement technique is applied through multiple TRPs based on a unified TCI framework in an NR system according to an embodiment.

According to an embodiment, an NR system is designed to perform data transmission and reception between a UE and a base station by using a directional beam. A characteristic of data communication through a directional beam is that high data rates can be supported through wide bandwidth and resources enabled by the use of high frequencies. On the other hand, another characteristic is that there is a constraint requiring precise beam direction configuration.

According to an embodiment, in the NR system, the UE may basically measure a synchronization signal through a synchronization signal/physical broadcast channel block (SS/PBCH Block) in an initial access step, and data transmission and/or reception may be performed through a beam direction in which the measured synchronization signal is detected.

According to an embodiment, a beam management technique may be applied in which the base station indicates an optimal beam (e.g., a beam having high signal quality) to the UE based on a Layer 1 channel measurement report received from the UE. The beam management technique proposed in the disclosure includes a procedure performed through a unified TCI state indication, an RRC configuration step, a step of activating multiple candidate TCI states through a MAC CE, and/or a step of indicating a beam for actual data transmission and reception through DCI. A unified TCI state structure may be differentiated from other TCI state frameworks in that the structure allows the indication and use of a common TCI state for both an uplink and a downlink.

According to an embodiment, in step 8-05, a UE 8-01 in an idle mode (RRC_IDLE) may camp on a specific base station/cell 8-02, and perform an RRC connection procedure with the base station or primary cell (PCell) 8-02, for reasons such as the generation of data to be transmitted.

According to an embodiment, the idle mode may be referred to as a state in which the UE is not connected to the network and is thus unable to transmit data, for power saving, and the UE may need to transition to a connected mode (RRC_CONNECTED) in order to transmit data. In addition, camping on the base station/cell may mean that the UE remains in the camped-on cell and receives a paging message in order to determine whether data is coming through a downlink.

According to an embodiment, in case that the UE succeeds in a connection procedure with the base station 8-02, a state of the UE may be changed to a connected mode (RRC_CONNECTED), and the UE in the connected mode may perform data transmission and/or reception with the base station (8-15).

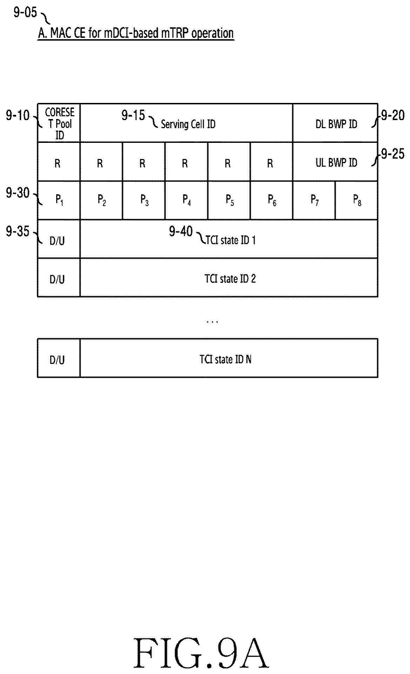

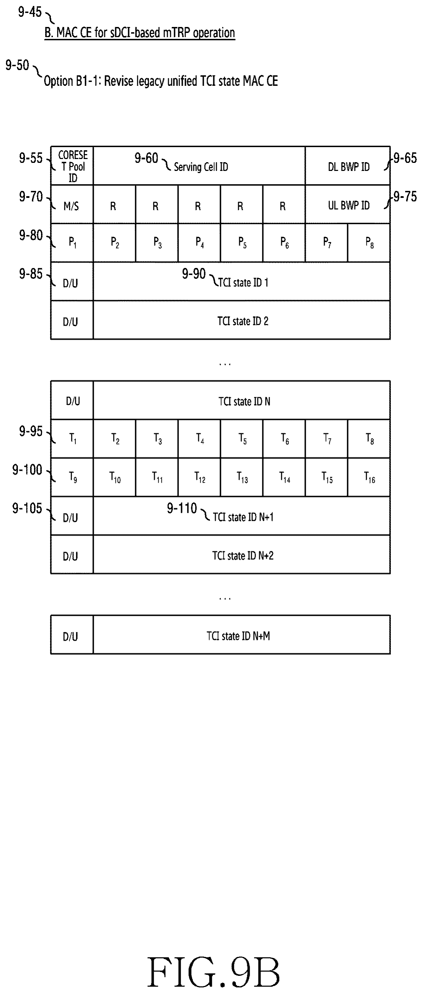

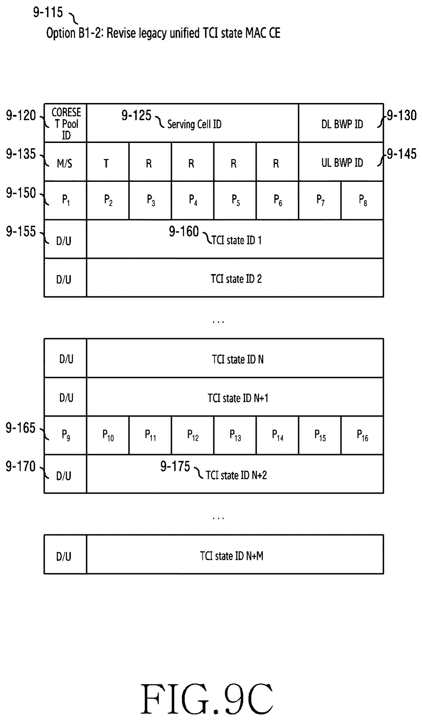

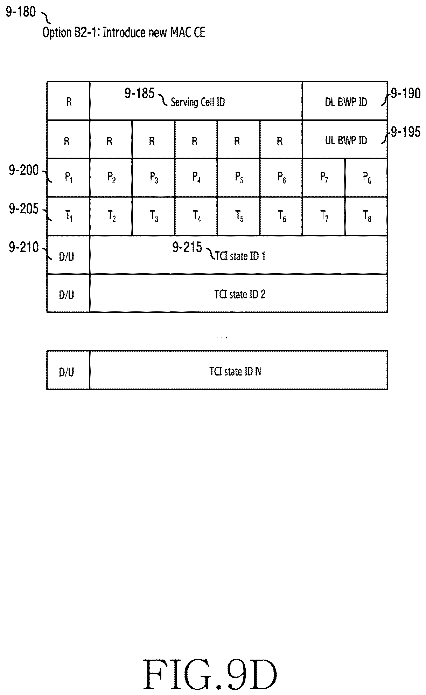

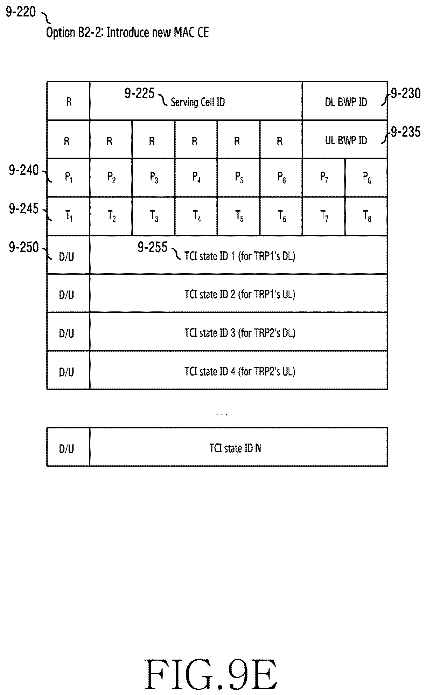

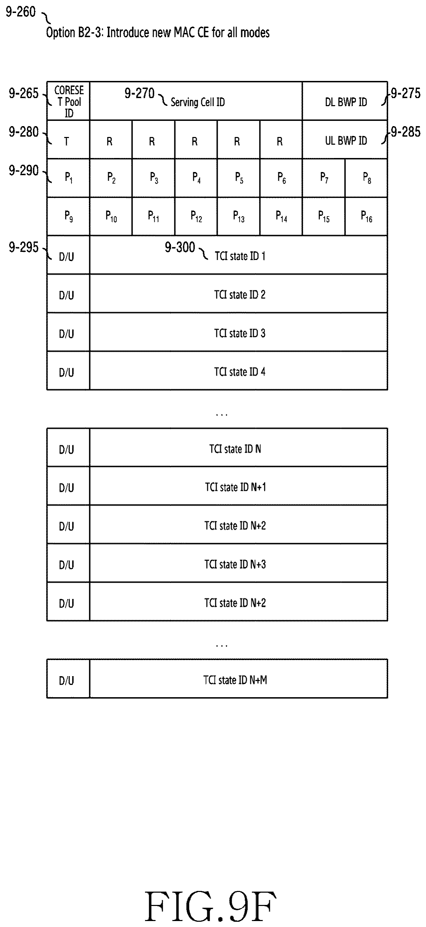

According to an embodiment, the UE may be configured with a unified TCI and a data communication enhancement technique through multiple TRPs from the base station, and may perform a procedure for changing to an optimal beam for a corresponding operation.
1. Step 8-20: The UE may be configured with a unified TCI state for each BWP of a serving cell through an RRC configuration (a maximum of 128 beams may be configured). For example, the UE may be directly configured with a unified TCI state applied to both an uplink and a downlink. For example, the UE may apply the unified TCI state by receiving a BWP indicator and a serving cell to which a configuration of the unified TCI state is provided. Refer to ASN.1 below. In addition, the UE may also be configured with a parameter for a data communication enhancement technique through multiple TRPs. 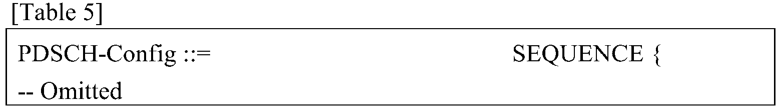 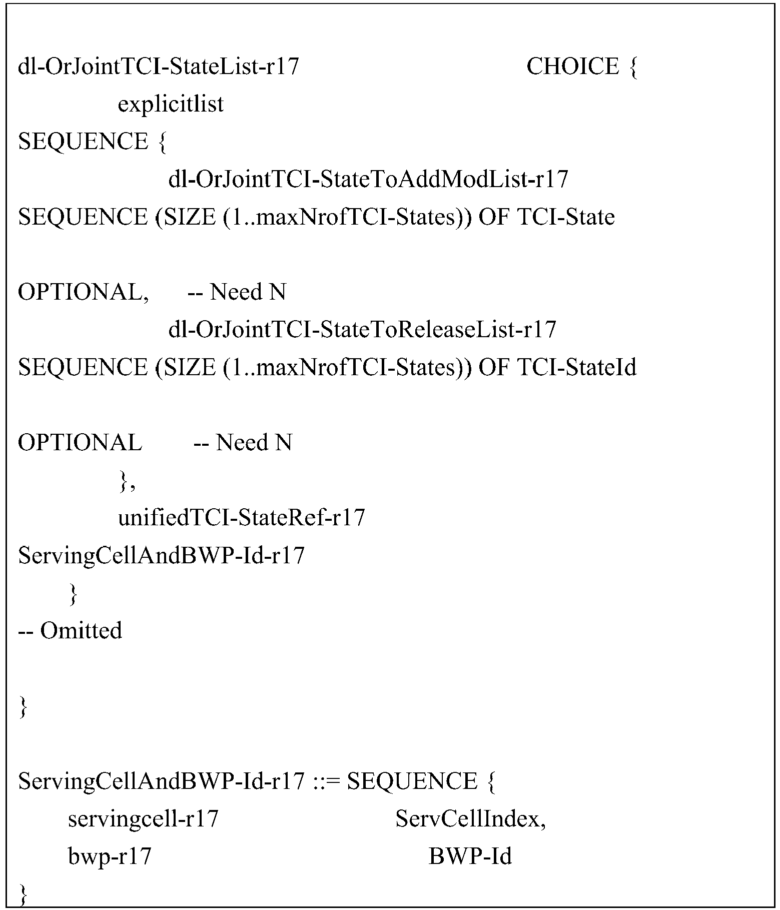
2. Step 8-25: The base station may indicate the UE to activate multiple beams to be activated, by using a MAC CE with respect to the unified TCI state configured through an RRC message. For example, a TCI state for a maximum of eight beam groups (when considering an uplink and a downlink as a single group) may be activated. The purpose of the MAC CE for activation indication may be understood as enabling the selection of candidate beams which can be dynamically indicated by DCI among TCI state configurations configured through RRC, thereby reducing the number of TCI states that the UE is required to manage and reducing the number of bits indicated in the DCI.
3. For example, a new MAC CE structure proposed in the disclosure may be introduced in a step of indicating activation through a MAC CE. For example, a MAC CE used may vary depending on whether a method for enhancing data communication through multiple TRPs includes a multi-TRP operation based on a single PDCCH or a multi-TRP operation based on multiple PDCCHs. The detailed MAC CE structure is described in FIG. 9.
4. Step 8-30: The base station may indicate a designated beam among candidate beams indicated by a MAC CE through an indicator in downlink control information (DCI). For example, an indicator for indicating a designated beam may consist of 3 bits. A beam indicated through the DCI may vary depending on the type of MAC CE previously received by the UE. For example, in the case of a multi-TRP operation based on a single PDCCH, multiple beams may be indicated in one DCI. In contrast, in the case of a multi-TRP operation based on multiple PDCCHs, since only one beam may be indicated in one piece of DCI, receiving DCI for each TRP may be required.
5. In step 8-30, when the UE has successfully received the received DCI and a PDSCH scheduled by the DCI, the UE may transmit, on the PUCCH, an ACK for the reception of the DCI and/or the reception of the PDSCH.

According to an embodiment, a beam configuration configured and indicated in steps 8-20 and/or 8-25 may be configured for each BWP. For example, the above-described operations (e.g., steps 8-05 to 8-30) may be applied to one serving cell (or TRP) and one BWP belonging to the serving cell. If a beam configuration for another serving cell and a specific BWP within the serving cell is to be changed, the above-described operations may be performed repeatedly for the corresponding cell.

In a general scenario, since multiple cells may have the same beam configuration, if repetitive operations may be omitted and the beam configuration in multiple serving cells may be updated/activated simultaneously, a delay caused by the repetitive operations may be reduced. Further, signaling overhead may be significantly reduced. Therefore, the base station may transmit, to the UE, a group (cell list) capable of simultaneously updating and activating the same beam configuration through an RRC configuration, and when the procedure is performed, TCI state activation may also occur simultaneously in multiple cells having the same beam configuration.

According to an embodiment, a unified TCI state may be indicated through DCI through the procedure, and the UE may perform transmission and/or reception of data by applying a previously used beam (e.g., previously used TCI state) until the UE transmits a PUCCH ACK in response to the indicated unified TCI state.

According to an embodiment, a time point at which the indicated TCI state is applied may be a first slot after the UE has transmitted the PUCCH ACK and a time equal to a BAT has elapsed (8-35).

According to an embodiment, a time point at which the indicated beam is applied and a data transmission and reception operation may vary depending on which mode of a data communication enhancement technique through multiple TRPs is applied. For example, in step 8-40, the UE applies the data communication enhancement technique through the multiple TRPs preconfigured through the indicated beam.

FIG. 9A illustrates a MAC CE structure for activating a unified TCI state to support an enhanced data transmission and reception technique through multiple TRPs according to an embodiment.

FIG. 9B illustrates a MAC CE structure for activating a unified TCI state to support an enhanced data transmission and reception technique through multiple TRPs according to an embodiment.

FIG. 9C illustrates a MAC CE structure for activating a unified TCI state to support an enhanced data transmission and reception technique through multiple TRPs according to an embodiment.

FIG. 9D illustrates a MAC CE structure for activating a unified TCI state to support an enhanced data transmission and reception technique through multiple TRPs according to an embodiment.

FIG. 9E illustrates a MAC CE structure for activating a unified TCI state to support an enhanced data transmission and reception technique through multiple TRPs according to an embodiment.

FIG. 9F illustrates a MAC CE structure for activating a unified TCI state to support an enhanced data transmission and reception technique through multiple TRPs according to an embodiment.

Referring to FIGS. 9A, 9B, 9C, 9D, 9E, and 9F, according to an embodiment, based on a "Unified TCI States Activation/Deactivation MAC CE," a new MAC CE may be introduced to support an enhanced data transmission and reception technique through multiple TRPs (e.g., a multi-PDSCH transmission based on a single PDCCH or a multi-PDSCH transmission based on multiple PDCCHs).

According to an embodiment, based on a "Unified TCI States Activation/Deactivation MAC CE," a new field for modifying the existing MAC CE may be added to support an enhanced data transmission and reception technique through multiple TRPs (e.g., a multi-PDSCH transmission based on a single PDCCH or a multi-PDSCH transmission based on multiple PDCCHs).

According to an embodiment, the existing MAC CE structure may include a serving cell ID and/or a UL/DL BWP ID, as described in 6-05, and may include a bitmap "Pi" field indicating whether both uplink/downlink TCI states exist, and D/U and TCI state indexes. Through the existing MAC CE, a unified TCI state indicated by a single serving cell/BWP may be indicated. For example, through the existing MAC CE, a beam corresponding to a single serving cell/BWP may be indicated.

For reference, since a unified TCI state may also indicate a TCI state defined in a neighboring cell, beam indication for an inter-cell environment may be possible. However, as can be seen from the MAC CE structure, since an operation is to indicate a candidate beam which may be used by a single TRP within a single serving cell/BWP, it is not possible to indicate a beam (TCI state) which is applied to multiple TRPs.

The disclosure proposes a beam indication method for supporting an enhanced data transmission and reception technique through the above-described multiple TRPs (e.g., a multi-PDSCH transmission based on a single PDCCH or a multi-PDSCH transmission based on multiple PDCCHs). For example, a MAC CE for a data transmission and reception method through multiple TRPs is described.

According to an embodiment, the disclosure basically uses a unified TCI state framework to indicate a beam, and thus follows a basic unified TCI state procedure described in FIG. 6 (e.g., configuring all candidate beams through RRC, activating beams through MAC CE, and/or indicating beams through DCI) as is. Therefore, the description of the basic unified TCI state procedure described in FIG. 6 may also be applied to the disclosure.

However, the difference is that previously, when activating and indicating a unified TCI state, only a single TRP could be indicated, whereas the disclosure allows a base station to indicate beams to multiple TRPs by using a unified TCI state. In order to indicate a beam by using a unified TCI state to multiple TRPs, considerations include the maximum number of TCI states which may be indicated for each cell/BWP, the type of TCI states which may be applied across different TRPs (e.g., a resource (SSB, CSI-RS, SRS, etc.) referenced by a TCI state, and/or a method for distinguishing the mode for operation through a MAC CE.

In addition, for a repetition-based multi-TRP operation, the base station may configure, for the UE through RRC configuration, which TRPs may perform transmission and which TCI state repetition resources are associated with the transmission, and the UE may operate based on the configuration. An operation after the RRC configuration may vary depending on whether the UE performs transmission of multiple PDSCHs based on a single PDCCH or transmission of multiple PDSCHs based on multiple PDCCHs. The UE may receive associated beam indications through a MAC CE and DCI.

**[Table 6]**

| |
|---|
| - For repetition-based MTRP transmission schemes, the indicated TCI states can be mapped to different "repetition occasions" |
| - For non-repetition based MTRP transmission schemes, the association can be based on higher layer signaling index configuration such as CORESET pool index configuration for MDCI |

The disclosure proposes a unified TCI state procedure for two main operations, specifically a MAC CE design which enables beam indication for each operation. A data transmission and reception enhancement technique through multiple TRPs based on multiple PDCCHs is illustrated in FIG. 7.
1) A PDSCH transmission technique based on multiple PDCCHs (case 7-A in FIG. 7 and case 9-A in FIG. 7)

- As described in case 7-A in FIG. 7, the above-described technique is a method for scheduling respective data transmissions through two TRPs on two PDCCHs, and performing data transmission and reception based on the scheduling. Therefore, a method for indicating a beam (TCI state) applied to data transmission and reception for each TRP through a unified TCI state may be required. That is, since a beam is indicated for each TRP, respective MAC CE and DCI transmissions may be required to indicate beams for two TRPs.

When indicating a unified TCI state through a MAC CE, a method for indicating a TRP with which the corresponding MAC CE is associated may be required.
▪ A maximum of eight TCI state code points may be indicated. (The number may be further increased.) Regarding the code point, in case that both uplink and downlink TCI states are indicated, it may be considered that the indication is for a single code point. That is, in case that uplink and downlink beams are indicated for all TCI states, a maximum of 16 TCI states may be indicated through a MAC CE.
▪ TRPs may be distinguished by introducing coresetPoolIndex (e.g., a coresetPoolIndex of 0 indicates a first TRP, and a coresetPoolIndex of 1 indicates a second TRP). Since a TRP index may not explicitly exist, a TRP may be distinguished by an index of a resource group in which actual data transmission is configured. For example, when PUCCH resource groups 1 and 2 exist, the lower-index group (e.g., 1) may be defined as a resource group transmitted from the first TRP, and the higher-index group (e.g., 2) may be defined as a resource group transmitted from the second TRP. Although the disclosure is described based on a PUCCH, this is merely an example and may be applied to other channel (PDCCH, PDSCH, and PUSCH) resources. Alternatively, coresetPoolIndex may be explicitly configured in an RRC configuration for each channel transmission. In case that a TRP association with the coresetPoolIndex is implicitly or explicitly indicated in a resource associated with a transmission channel, the coresetPoolIndex indication in the MAC CE may not be applied. In this case, the corresponding field may be set to 0 and transmitted.

- MAC CE design method
   ▪ Option A1: A MAC CE may be modified as a new field is added to the existing unified TCI state activation/deactivation MAC CE.
   ▪ Option A2: A new MAC CE may be introduced by adding a related-field. (new logical channel ID (LCID))

For reference, even when considering the two options described above, since the additional field required compared to the existing MAC CE is coresetPoolIndex, the MAC CE structure for the two options may be applied as shown in 9-04 (A. MAC CE for mDCI based mTRP operation).
◆ coresetPool ID field 9-10

- A coreset pool ID field may be a field for indicating which TRP a TCI state for a multi-TRP operation based on multiple PDCCHs corresponds to. For example, the coreset pool ID field may be a field for distinguishing between a primary TRP (e.g., TRP1) and a secondary TRP (e.g., TRP2). For example, when the coreset pool ID field is configured to 1, the coreset pool ID field is applied to a TRP for which a CORESET Pool ID is set to 1 for the secondary TRP (TRP2) in RRC. For example, if the coreset pool ID field is configured to 0, the coreset pool ID field may be applied to the existing operation (when a CORESET Pool ID is not configured), or to the primary TRP (TRP1) and a TRP for which a CORESET Pool ID is set to 0. For example, the coreset pool ID field may be associated with a ControlResourceSetId field in DCI. That is, the coreset pool ID field may be a field for distinguishing which TRP a TCI state indicated by a MAC CE and/or DCI is applied to.
- If a group of serving cells to which the same TCI state may be applied is configured through RRC and a TCI state is activated through a MAC CE, the same TCI state activation may be applied to all cells within a preconfigured serving cell group. If the UE is configured with a function of activating the same TCI state for all cells separately, the CORESET Pool ID may be ignored.
- If two or more TRPs are supported in a future release and next-generation communication system (6G) and a function of the disclosure is applied, the size of the CORESET Pool ID may be increased based on two or more TRPs. For example, if four TRPs are supported, the coresetPoolID field may be required to distinguish TRPs by using 2 bits. The CoresetPool ID field may be defined using reserved bits within the MAC CE.

The CoresetPool ID field is described in detail in Table 7.

**[Table 7]**

| |
|---|
| CORESET Pool ID: This field indicates that mapping between the activated TCI states and the codepoint of the DCI *Transmission Configuration Indication* set by field TCI state IDᵢ is specific to the *ControlResourceSetId* configured with CORESET Pool ID as specified in TS 38.331 [5]. This field set to 1 indicates that this MAC CE shall be applied for the DL/UL transmission scheduled by CORESET with the CORESET pool ID equal to 1, otherwise, this MAC CE shall be applied for the DL/UL transmission scheduled by CORESET pool ID equal to 0. If the *coresetPoolIndex* is not configured for any CORESET, MAC entity shall ignore the CORESET Pool ID field in this MAC CE when receiving the MAC CE. If the Serving Cell in the MAC CE is configured in a cell list that contains more than one Serving Cell, the CORSET Pool ID field shall be ignored when receiving the MAC CE. |

◆ Other fields 9-15 to 9-40 are used as defined in the existing MAC CE.
   - Refer to 6-05 in FIG. 6

### 2) A PDSCH transmission technique based on one PDCCH (case 7-B in FIG. 7 and case 9-B in FIG. 7)

- As described in case 7-B in FIG. 7, the corresponding technique may be a method for scheduling data transmission through two TRPs on a single PDCCH and performing data transmission and reception based on the scheduling. Therefore, a method for indicating a beam (TCI state) applied to data transmission and reception of two TRPs on a single PDCCH through a unified TCI state may be required. That is, since beams for two TRPs are indicated through one PDCCH, one MAC CE and DCI transmission may be required to indicate the beams for the two TRPs.
   ▪ A maximum of eight TCI state code points may be indicated. (For example, the number may be further increased.) Regarding the code point, in case that both uplink and downlink TCI states are indicated for a maximum of two TRPs, it may be considered that the indication is for a single code point. For example, in case that two TRPs are both applied and uplink/downlink beams are indicated for all TCI states, a maximum of 32 TCI states may be indicated through a MAC CE.
   ▪ Through an RRC configuration, a unified TCI state in a serving cell may be configured to a separate TCI state mode or a joint TCI state mode, and a configuration of the unified TCI state may be applied identically to multiple TRPs within a serving cell/BWP.
- MAC CE design method
   ▪ Option B1: A MAC CE may be modified by adding a new field to the existing unified TCI state activation/deactivation MAC CE.
      ◆ Option B1-1 (9-50)

      - coresetPoolID field 9-55: This field, described in 9-10, may be a field which is applied when a PDSCH transmission technique based on multiple PDCCHs is used. The coresetpool ID field is unrelated when a single PDCCH-based PDSCH transmission technique is used, but the coresetpool ID field may exist if the MAC CE supports both functions simultaneously. The UE may ignore the coresetpool ID field when the single PDCCH-based PDSCH transmission technique is applied.
      - M/S field 9-70: The M/S field may be a field for distinguishing whether the received MAC CE is for a PDSCH transmission based on multiple PDCCHs or for a PDSCH transmission based on a single PDCCH. M stands for "multiple" and S stands for "single." For example, when the MS field is 0, it may be applied to a PDSCH transmission based on multiple PDCCHs. For example, when the MS field is 1, it may be applied to a PDSCH transmission based on a single PDCCH, and it may be used for the opposite case. The disclosure describes only a PDSCH transmission based on a single PDCCH. However, this is merely an example, and the disclosure is not limited thereto.
      - Ti field: A Ti field is an indicator indicating whether a TCI state applied to a secondary TRP (TRP2) exists for an i-th code point. The Ti field may have a feature of indicating whether a secondary TRP (TRP2) exists for each code point.
      - Pi+8 field P9 to P16: A Pi+8 field may be a field indicating whether a TCI state with uplink/downlink distinction is indicated for each code point of TRP2. If the same mode is applied to both TRP1 and TRP2, the Pi+8 field (an octet including the entire bitmap) may be omitted.
      - Other fields 9-60, 9-65, 9-75, 9-85, 9-90, 9-105, and 9-110 are used as defined in the existing MAC CE.
   ▪ Refer to 6-05 in FIG. 6
      ◆ Option B1-2 (9-115)

      - T field: AT field is an indicator indicating whether a TCI state applied to a secondary TRP (TRP2) exists. The T field has a feature of indicating whether a secondary TRP (TRP2) exists for all code points indicated in a MAC CE.
      - The same applies as described in Option B1-1.
   ▪ Option B2: A new MAC CE is introduced by adding a related-field (new LCID)
      ◆ Option B2-1 (9-180)
         - Ti field: A Ti field is an indicator indicating whether a TCI state applied to a secondary TRP (TRP2) exists for an i-th code point. The Ti field has a feature of indicating whether a secondary TRP (TRP2) exists for each code point.
         - Other fields 9-185, 9-190, 9-195, 9-200, 9-210, and 9-215 may be used as defined in the existing MAC CE.
         - Refer to 6-05 in FIG. 6
      ◆ Option B2-2 (9-220)
         - Basically, a function may be the same as the function described in Option B2-1 (9-180).
         - To provide a specific example, a diagram, 9-250 and 9-255, illustrating a case where a maximum of four TCI states are applied to a single code point.
   ▪ TCI state ID 1 (for TRP1's DL)
   ▪ TCI state ID 2 (for TRP1's UL)
   ▪ TCI state ID 3 (for TRP2's DL)
   ▪ TCI state ID 4 (for TRP2's UL)
      ◆ Option B2-3 (9-260)
         - T Field: A T field is an indicator indicating whether a TCI state applied to a secondary TRP (TRP2) exists. The T field has a feature of indicating whether a secondary TRP (TRP2) exists for all code points indicated in a MAC CE.
         - Pi+8 field P9 to P16: A Pi+8 field may be a field indicating whether a TCI state with uplink/downlink distinction is indicated for each code point of TRP2. If the same mode is applied to both TRP1 and TRP2, the Pi+8 field (e.g., an octet including the entire bitmap) may be omitted.
         - To provide a specific example, a diagram, 9-295 and 9-300, illustrating a case where a maximum of four TCI states are applied to a single code point.
   ▪ TCI state ID 1 (for TRP1's DL)
   ▪ TCI state ID 2 (for TRP1's UL)
   ▪ TCI state ID 3 (for TRP2's DL)
   ▪ TCI state ID 4 (for TRP2's UL)

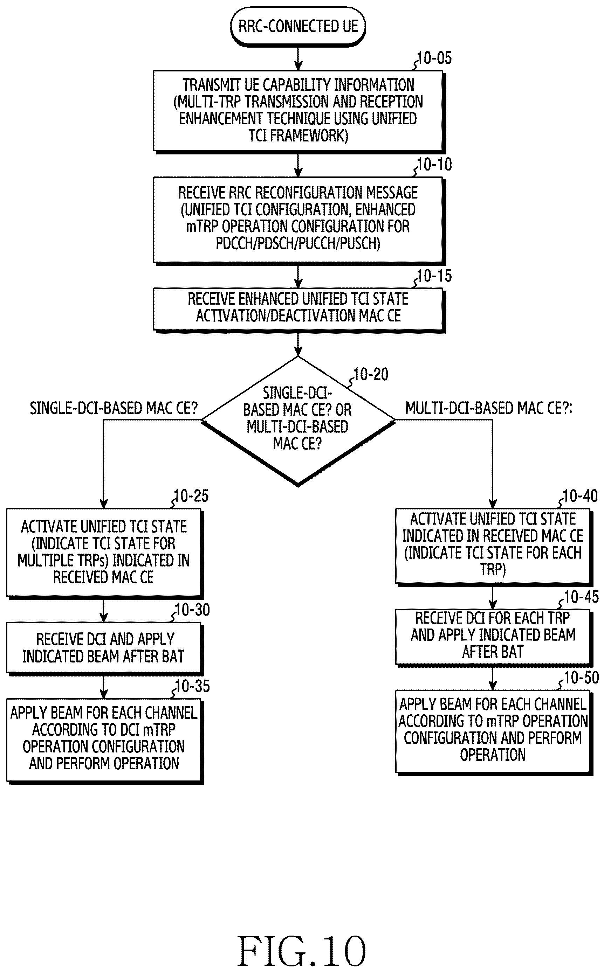

FIG. 10 is a diagram illustrating operations of a UE according to an embodiment.

Referring to FIG. 10, in step 10-05 according to an embodiment, a UE stores UE capability and transmits the UE capability to a base station. For example, the UE may transmit, to the base station, information including at least one indicator indicating UE capability.

According to an embodiment, the UE may transmit, to the base station, information on whether the UE is capable of supporting a data transmission and reception enhancement technique through multiple TRPs by using a unified TCI framework. The UE may signal and transmit, to the base station, whether a function of supporting a data transmission and reception enhancement technique through multiple TRPs by using a unified TCI framework is supported for each band or is supported for each UE. In addition, the information transmitted to the base station may also include whether the UE is capable of beam switching for cell groups to which the unified TCI framework is applied simultaneously, depending on UE capability.

According to an embodiment, in step 10-10, the UE may receive an RRC configuration from the base station, and the received RRCReconfiguration message may include configuration information related to a multi-TRP operation to which a unified TCI structure is applied. For example, the configuration information may be a unified TCI state configuration and configurations related to (A) a PDSCH transmission technique based on multiple PDCCHs and (B) a PDSCH transmission technique based on a single PDCCH, as described in FIG. 7. To indicate configuration information related to a multi-TRP operation to which a unified TCI structure is applied, coresetPoolIndex may be included in a resource configuration of each transmission channel. The coresetPoolIndex indicates which TRP is associated with a resource of a transmission channel to which a parameter (e.g., coresetPoolIndex) is configured. In addition, the configuration information may additionally include a cell group configuration associated with a simultaneous beam update operation for multiple carriers. That is, based on the configuration information, the unified TCI framework may be applied to a cell group, and thus a cell to which simultaneous beam switching is applied may be configured.

According to an embodiment, in step 10-15, the UE may receive a unified TCI state activation/deactivation MAC CE from the base station. For example, the MAC CE may be a MAC CE (referring to 9-05 in FIG. 9) for supporting a multi-TRP operation based on a single PDCCH. For example, the MAC CE may be a MAC CE (referring to 9-45 in FIG. 9) for supporting a multi-TRP operation based on multiple PDCCHs. The UE operation may vary depending on the type of MAC CE received.

According to an embodiment, in case that the UE has received the MAC CE (referring to 9-05 in FIG. 9) for supporting the multi-TRP operation based on the single PDCCH, the UE may activate the unified TCI state (indicate TCI states for multiple TRPs) indicated in the MAC CE received in step 10-25. That is, the UE may activate beams associated with two TRPs through a single reception of a MAC CE. According to an embodiment, in step 10-30, the UE may receive a PDCCH (DCI) from the base station and receive an indication of a single code point to be applied during data transmission and reception among multiple activated beams. For example, the code point may include a unified TCI state used for TRP1 and TRP2. For example, the code point may include only a TCI state for TRP1 or a TCI state for TRP2. According to an embodiment, the UE may apply a beam or beams associated with the indicated code point after a BAT. According to an embodiment, in step 10-35, the UE may apply the unified TCI state(s) indicated in the above-described step to data transmission and/or reception through multiple TRPs. For example, the UE performs data communication through the indicated beam for channel transmission across both an uplink and a downlink.

According to an embodiment, in case that the UE has received a MAC CE (referring to 9-45 in FIG. 9) for supporting a multi-TRP operation based on multiple PDCCHs, the UE may activate the unified TCI state (indicate a TCI state for a corresponding TRP) indicated in the MAC CE received for each TRP in step 10-40. That is, since a beam associated with a single TRP may be activated through a single reception of a MAC CE, the UE may require two receptions of MAC CE for an operation of two TRPs. According to an embodiment, in step 10-45, the UE may receive a PDCCH (DCI) associated with each TRP from the base station and receive an indication of a single code point to be applied during data transmission and reception among multiple activated beams. The indicated code point is configured for each TRP, and the UE may need to separately manage a code point for each TRP through a separate buffer when the UE has received a MAC CE for each TRP in the above-described step. For example, the code point may include an actually configured unified TCI state. For example, the code point may include only a TCI state for TRP1 or a TCI state for TRP2. The UE may apply a beam associated with the indicated code point after a BAT. For example, the indicated beam may be applied after the BAT has elapsed following the reception of DCI through each TRP and the transmission of a PUCCH ACK associated therewith. Regarding a beam application time point, the beam application time point may be calculated for each TRP. For another example, in order to apply beam switching for two TRPs simultaneously at the same time point, the simultaneous beam switching may be performed based on a TRP for which the indication is completed later or a TRP for which the indication is completed earlier. According to an embodiment, in step 10-50, the UE applies the unified TCI state(s) indicated in the step to data transmission and reception through multiple TRPs. For example, the UE performs data communication through the indicated beam for channel transmission across both an uplink and a downlink.

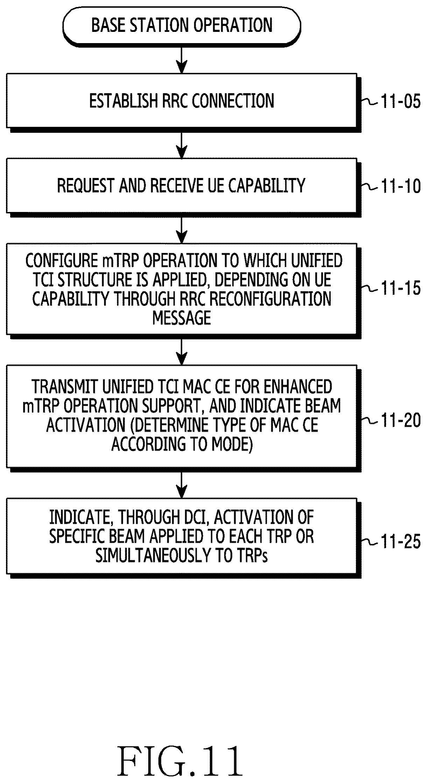

FIG. 11 is a diagram illustrating operations of a base station according to an embodiment.

Referring to FIG. 11, in step 11-05 according to an embodiment, a base station may establish an RRC connection with a UE.

According to an embodiment, in step 11-10, the base station may request UE capability from the UE and receive UE capability information of the UE. The base station may analyze the received UE capability (or based on the UE capability), determine or identify whether the UE is capable of supporting a data transmission and reception enhancement technique through multiple TRPs by a unified TCI framework. In addition, the base station may check or identify whether the base station has configured the UE with a function of supporting a data transmission and reception enhancement technique through multiple TRPs by using a unified TCI framework. In addition, the base station may identify whether the function of supporting the data transmission and reception enhancement technique through the multiple TRPs by using the unified TCI framework is supported for each band or is supported for each UE. In addition, the base station may identify whether the UE is capable of applying a unified TCI framework to a cell group and simultaneously applying beam switching to the cell group, depending on the UE capability.

According to an embodiment, in step 11-15, the base station may configure, for the UE through an RRC message, a multi-TRP operation to which a unified TCI structure is applied, depending on the UE capability. For example, the configured multi-TRP operation to which the unified TCI structure is applied may correspond to (A) a PDSCH transmission technique based on multiple PDCCHs and (B) a PDSCH transmission technique based on a single PDCCH, as described in FIG. 7 of the disclosure. In addition, the base station may transmit a unified TCI state-related configuration to the UE. In addition, if the UE does not have the corresponding capability or the base station determines that the corresponding configuration is unnecessary, the UE may support a data enhancement technique through multiple TRPs by using the existing TCI state procedure.

According to an embodiment, in step 11-20, the base station indicates the UE to perform beam update by transmitting a MAC CE for beam update for a specific carrier and BWP to the UE, based on a unified TCI framework, beam configuration information, and/or information on a simultaneous beam update operation for multiple carriers, configured through RRC. A beam indication MAC CE may be one of the MAC CEs described in FIG. 8. That is, the MAC CE is intended to support a data transmission and reception enhancement technique through multiple TRPs by using a unified TCI framework. If a unified TCI state is not configured, the base station may use the existing TCI state activation MAC CE.

According to an embodiment, in step 11-25, the base station indicates beam activation for a BWP of a specific serving cell through DCI, thereby indicating beam information used for data communication, and using the indicated beam.

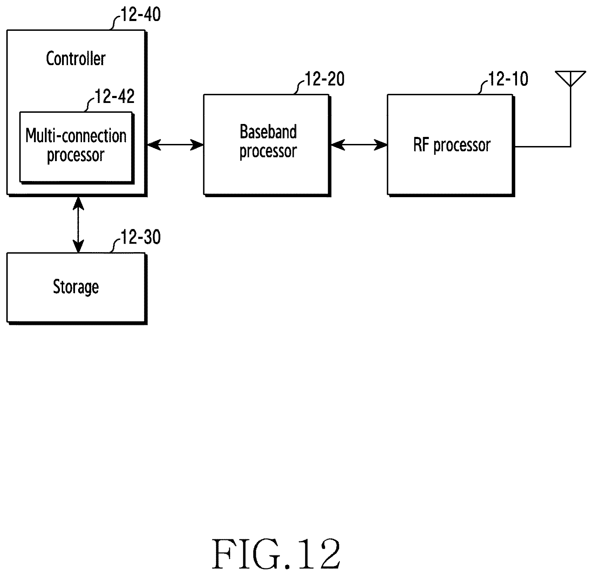

FIG. 12 is a block diagram illustrating an exemplary structure of a UE according to an embodiment.

Referring to FIG. 12, the UE includes a radio frequency (RF) processor 12-10, a baseband processor 12-20, a storage 12-30, and/or a controller 12-40. As another example, the controller 12-40 may include at least one processor or controller.

According to an embodiment, the RF processor 12-10 and the baseband processor 12-20 may correspond to a transceiver. The storage 12-30 may correspond to a memory. The controller 12-40 may correspond to at least one processor or controller.

Components of the UE are not limited to the above-described example. For example, the UE may include a larger or smaller number of components than the above-described components. For example, the UE may include a transceiver and a controller coupled with the transceiver. As another example, the UE may include at least one transceiver and at least one processor coupled with the at least one transceiver. As another example, the UE may include a transceiver, a controller, and a memory in which instructions executed by the controller are stored.

The UE described in FIG. 12 may correspond to the UE described in FIGS. 1 to 13.

According to an embodiment, the RF processor 12-10 may perform functions for transmitting/receiving signals through a radio channel, such as signal band conversion and amplification. That is, the RF processing unit 12-10 up-converts a baseband signal provided from the baseband processing unit 12-20 to an RF band signal, transmits the same through an antenna, and down-converts an RF band signal received through the antenna to a baseband signal. For example, the RF processor 12-10 may include a transmission filter, a reception filter, an amplifier, a mixer, an oscillator, a digital-to-analog converter (DAC), and/or an analog-to-digital converter (ADC). Although only one antenna is illustrated in FIG. 12, the UE may include multiple antennas. In addition, the RF processor 12-10 may include multiple RF chains. Furthermore, the RF processor 12-10 may perform beamforming. For the beamforming, the RF processor 12-10 may adjust the phase and magnitude of each of signals transmitted and received through multiple antennas or antenna elements. In addition, the RF processor may perform MIMO, and may receive multiple layers when performing a MIMO operation.

According to an embodiment, the baseband processor 12-20 may perform a function of conversion between a baseband signal and a bitstream according to a physical layer specification of a system. For example, during data transmission, the baseband processor 12-20 may encode and modulate a transmitted bitstring to generate complex symbols. In addition, during data reception, the baseband processor 12-20 may demodulate and decode a baseband signal provided from the RF processor 12-10 to restore a received bitstring. For example, when following the orthogonal frequency division multiplexing (OFDM) scheme, during data transmission, the baseband processor 12-20 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 12-20 may split a baseband signal provided from the RF processor 12-10 at the OFDM symbol level, may restore signals mapped to subcarriers through a fast Fourier transform (FFT) operation, and may restore a received bitstring through demodulation and decoding.

According to an embodiment, the baseband processor 12-20 and the RF processor 12-10 may transmit/receive a signal as described above. The baseband processor 12-20 and the RF processor 12-10 may be referred to as a transmitter, a receiver, a transceiver, or a communication unit. Furthermore, at least one of the baseband processor 12-20 and the RF processor 12-10 may include multiple communication modules to support multiple different radio access technologies. In addition, at least one of the baseband processor 12-20 and the RF processor 12-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

According to an embodiment, the storage 12-30 may store basic programs, application programs, and data, such as configuration information, for operation of the main base station. Particularly, the storage 12-30 may store information regarding a second access node configured to perform wireless communication by using a second radio access technology. In addition, the storage 12-30 may provide the stored data at the request of the controller 12-40.

According to an embodiment, the controller 12-40 may control the overall operation of the UE. For example, the controller 12-40 may transmit/receive signals through the baseband processor 12-20 and the RF processor 12-10. In addition, the controller 12-40 records data in the storage 12-30 and reads the data from the storage 12-30. To this end, the controller 12-40 may include at least one processor. For example, the controller 12-40 may include a communication processor (CP) configured to perform control for communication, and an application processor (AP) configured to control upper layers such as application programs.

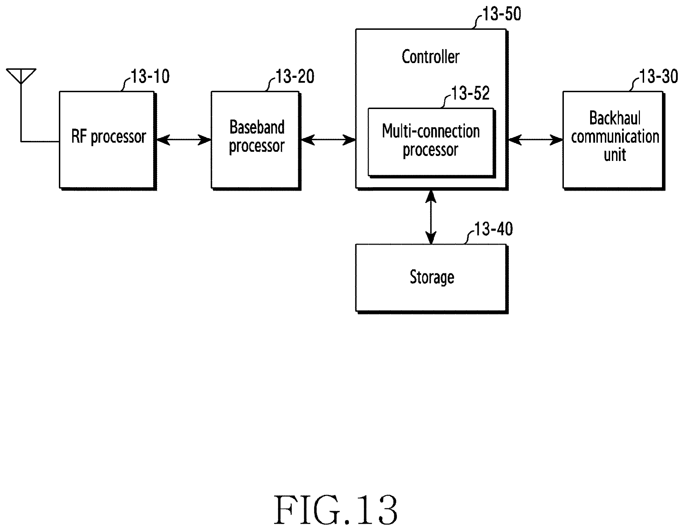

FIG. 13 is a block diagram illustrating an exemplary structure of a base station according to an embodiment.

Referring to FIG. 13, the base station includes an RF processor 13-10, a baseband processor 13-20, a backhaul communication unit 13-30, a storage 13-40, and a controller 13-50. As another example, the controller 13-50 may include at least one processor or controller.

According to an embodiment, the RF processor 13-10 and the baseband processor 13-20 may correspond to a transceiver. The storage 13-40 may correspond to a memory. The controller 13-50 may correspond to at least one processor or controller.

However, components of the base station are not limited to the above-described example. For example, the base station may include a larger or smaller number of components than the above-described components. For example, the base station may include a transceiver and a controller coupled with the transceiver. As another example, the base station may include at least one transceiver and at least one processor coupled with the at least one transceiver. As another example, the base station may include a transceiver, a controller, and a memory in which instructions executed by the controller are stored.

The base station described in FIG. 13 may correspond to the base station described in FIGS. 1 to 13.

According to an embodiment, the RF processor 13-10 may perform functions for transmitting/receiving signals through a radio channel, such as signal band conversion and amplification. That is, the RF processor 13-10 may up-convert a baseband signal provided from the baseband processor 13-20 to an RF band signal, may transmit the same through an antenna, and may down-convert an RF band signal received through the antenna to a baseband signal. For example, the RF processor 13-10 may include a transmission filter, a reception filter, an amplifier, a mixer, an oscillator, a DAC, and an ADC. Although only one antenna is illustrated in FIG. 13, the first access node may include multiple antennas. In addition, the RF processor 13-10 may include multiple RF chains. Furthermore, the RF processor 13-10 may perform beamforming. For the beamforming, the RF processor 13-10 may adjust the phase and magnitude of each of signals transmitted and received through multiple antennas or antenna elements. The RF processor may transmit one or more layers to perform a downward MIMO operation.

According to an embodiment, the baseband processor 13-20 may perform a function of conversion between a baseband signal and a bitstream according to a physical layer specification of a first wireless access technology. For example, during data transmission, the baseband processor 13-20 may encode and modulate a transmitted bitstring to generate complex symbols. In addition, during data reception, the baseband processor 13-20 may demodulate and decode a baseband signal provided from the RF processor 13-10 to restore a received bitstring. For example, when following the OFDM scheme, during data transmission, the baseband processor 13-20 may encode and modulate a transmitted bitstring to generate complex symbols, may map the complex symbols to subcarriers, and may configure OFDM symbols through an IFFT operation and CP insertion. In addition, during data reception, the baseband processor 13-20 may split a baseband signal provided from the RF processor 13-10 at the OFDM symbol level, may restore signals mapped to subcarriers through FFT operation, and may restore a received bitstring through demodulation and decoding. The baseband processor 13-20 and the RF processor 1m-10 may transmit and receive signals as described above. Therefore, the baseband processor 13-20 and the RF processor 13-10 may be referred to as a transmitter, a receiver, a transceiver, or a communication unit.

According to an embodiment, the backhaul communication unit 13-30 may provide an interface for performing communication with other nodes within a network. That is, the backhaul communication unit 13-30 converts bitstrings transmitted from the main base station to other nodes, for example, an auxiliary base station, a core network, etc., into physical signals, and converts physical signals received from the other nodes into bitstrings.

The storage 13-40 may store basic programs, application programs, and data, such as configuration information, for operation of the main base station. Particularly, the storage 13-40 may store information regarding a bearer allocated to a connected UE, a measurement result reported from the connected UE, and the like. In addition, the storage 13-40 may store information serving as a criterion for determining whether to provide or stop multiple connections to UEs. In addition, the storage 13-40 may provide the stored data at the request of the controller 13-50.

According to an embodiment, the controller 13-50 may control the overall operation of the main base station. For example, the controller 13-50 transmits/receives signals through the baseband processor 13-20 and the RF processor 13-10 or through the backhaul communication unit 13-30. In addition, the controller 13-50 records data in the storage 13-40 and reads the data from the storage 13-40. To this end, the controller 13-50 may include at least one processor.

## Claims

1. A method performed by a user equipment (UE) in a wireless communication system, the method comprising:
receiving, from a base station, a medium access control (MAC) control element (CE) comprising a control resource set (CORESET) pool ID field and a transmission configuration indicator (TCI) state identification (ID) field indicating a plurality of TCI states, wherein the CORESET pool ID field indicates a CORESET pool associated with the plurality of TCI states; and
receiving, from the base station, downlink control information (DCI) comprising information indicating a TCI state among the plurality of TCI states within a CORESET of the CORESET pool.

2. The method of claim 1, wherein the CORESET pool ID field indicates that mapping of the plurality of TCI states and the TCI state corresponds to the CORESET.

3. The method of claim 1, wherein, in case that the CORESET pool ID field is set to a first value, the plurality of TCI states correspond to a first CORESET pool associated with a first transmission reception point (TRP), and
wherein, in case that the CORESET pool ID field is set to a second value, the plurality of TCI states correspond to a second CORESET pool associated with a second TRP.

4. The method of claim 1, further comprising:
receiving configuration information associated with the CORESET from the base station,
wherein the configuration information comprises CORESET pool indexes set to different values.

5. A user equipment (UE) in a wireless communication system, the UE comprising:
a transceiver; and
a controller coupled with the transceiver,
wherein the controller is configured to:
receive, from a base station, a medium access control (MAC) control element (CE) comprising a control resource set (CORESET) pool ID field and a transmission configuration indicator (TCI) state identification (ID) field indicating a plurality of TCI states, wherein the CORESET pool ID field indicates a CORESET pool associated with the plurality of TCI states; and
receive, from the base station, downlink control information (DCI) comprising information indicating a TCI state among the plurality of TCI states within a CORESET of the CORESET pool.

6. The UE of claim 5, wherein the CORESET pool ID field indicates that mapping of the plurality of TCI states and the TCI state corresponds to the CORESET.

7. The UE of claim 5, wherein, in case that the CORESET pool ID field is set to a first value, the plurality of TCI states correspond to a first CORESET pool associated with a first transmission reception point (TRP), and
wherein, in case that the CORESET pool ID field is set to a second value, the plurality of TCI states correspond to a second CORESET pool associated with a second TRP.

8. The UE of claim 5, wherein the controller is configured to:
receive configuration information associated with the CORESET from the base station, and
wherein the configuration information comprises CORESET pool indexes set to different values.

9. A method performed by a base station in a wireless communication system, the method comprising:
transmitting, to a user equipment (UE), a medium access control (MAC) control element (CE) comprising a control resource set (CORESET) pool ID field and a transmission configuration indicator (TCI) state identification (ID) field indicating a plurality of TCI states, wherein the CORESET pool ID field indicates a CORESET pool associated with the plurality of TCI states; and
transmitting, to the UE, downlink control information (DCI) comprising information indicating a TCI state among the plurality of TCI states within a CORESET of the CORESET pool.

10. The method of claim 9, wherein the CORESET pool ID field indicates that mapping of the plurality of TCI states and the TCI state corresponds to the CORESET.

11. The method of claim 9, wherein, in case that the CORESET pool ID field is set to a first value, the plurality of TCI states correspond to a first CORESET pool associated with a first transmission reception point (TRP), and
wherein, in case that the CORESET pool ID field is set to a second value, the plurality of TCI states correspond to a second CORESET pool associated with a second TRP.

12. The method of claim 9, further comprising:
transmitting configuration information associated with the CORESET to the UE,
wherein the configuration information comprises CORESET pool indexes set to different values.

13. A base station in a wireless communication system, the base station comprising:
a transceiver; and
a controller coupled with the transceiver,
wherein the controller is configured to:
transmit, to a user equipment (UE), a medium access control (MAC) control element (CE) comprising a control resource set (CORESET) pool ID field and a transmission configuration indicator (TCI) state identification (ID) field indicating a plurality of TCI states, wherein the CORESET pool ID field indicates a CORESET pool associated with the plurality of TCI states; and
transmit, to the UE, downlink control information (DCI) comprising information indicating a TCI state among the plurality of TCI states within a CORESET of the CORESET pool.

14. The base station of claim 13, wherein the CORESET pool ID field indicates that mapping of the plurality of TCI states and the TCI state corresponds to the CORESET,
wherein, in case that the CORESET pool ID field is set to a first value, the plurality of TCI states correspond to a first CORESET pool associated with a first transmission reception point (TRP), and
wherein, in case that the CORESET pool ID field is set to a second value, the plurality of TCI states correspond to a second CORESET pool associated with a second TRP.

15. The base station of claim 13, wherein the controller is configured to:
transmit configuration information associated with the CORESET to the UE, and
wherein the configuration information comprises CORESET pool indexes set to different values.
